# EUROPÄISCHE PATENTSCHRIFT

(11) **EP 4 055 297 B1**
(45) Veröffentlichungstag und Bekanntmachung des Hinweises auf die Patenterteilung: **13.12.2023**
(21) Anmeldenummer: 20704212.8
(22) Anmeldetag: 30.01.2020
(51) Int. Cl.: F16F 1/368, F16F 1/42, B29C 70/54, B29C 70/46, B29L 31/00

(54) **BIEGEFEDERELEMENT AUS EINEM FASERKUNSTSTOFFVERBUNDMATERIAL**
BENDING SPRING ELEMENT COMPRISING A FIBRE REINFORCED MATERIAL
ÉLÉMENT DE RESSORT À FLEXION AYANT UN MATERIAL RENFORCÉ DE FIBRES

(30) Priorität: 04.11.2019 DE 102019129581
(43) Veröffentlichungstag der Anmeldung: 14.09.2022
(73) Patentinhaber: DANTO Invention GmbH & Co. KG, 64589 Stockstadt am Rhein (DE); Rheinmetall Invent GmbH, 74172 Neckarsulm (DE)
(72) Erfinder: SCHWARZ, Anna, 67596 Dittelsheim-Heßloch (DE); KELLER, Tobias, 67596 Dittelsheim-Heßloch (DE)
(74) Vertreter: Habermann Intellectual Property Partnerschaft von Patentanwälten mbB
(86) Internationale Anmeldenummer: PCT/EP2020/052360
(87) Internationale Veröffentlichungsnummer: WO 2021/089192

(56) Entgegenhaltungen:
- EP-A1- 0 005 916
- DE-B3-102015 012 334
- DE-B4-102008 057 463
- US-A- 4 942 075

## Beschreibung

Die Erfindung betrifft ein Biegefederelement aus einem Faserkunststoffverbundmaterial, wobei das Biegefederelement auf zwei einander gegenüberliegenden Seiten einer Mittenebene jeweils eine Funktionsschicht aus einem Faserkunststoffverbundmaterial aufweist, wobei Biegefederfasern innerhalb der jeweiligen Funktionsschichten zumindest bündelweise relativ zueinander parallel ausgerichtet sind und entlang einer Längsrichtung des Biegefederelements verlaufen, wobei das Biegefederelement mindestens einen Krümmungsabschnitt aufweist, in welchem die zwischen den beiden Funktionsschichten verlaufende Mittenebene des unbelasteten Biegefederelements in der Längsrichtung des Biegefederelements um mehr als 90° gekrümmt verläuft, wobei das Biegefederelement mindestens einen Längsabschnitt aufweist, in welchem die Mittenebene des unbelasteten Biegefederelements entweder keine nennenswerte Krümmung oder eine Krümmungsumkehr aufweist, und wobei bei einer bestimmungsgemäßen Auslenkung des Biegefederelements ein in dem Krümmungsabschnitt nach außen gerichtet angeordneter Funktionsschichtabschnitt auf Zug beansprucht und ein in dem Krümmungsabschnitt gegenüberliegender und nach innen gerichteter Funktionsschichtabschnitt auf Druck beansprucht ist.

Ein Biegefederelement kann einstückig ausgestaltet sein und eine Biegefeder oder eine Biegefedereinrichtung bilden. Es ist ebenfalls möglich, dass mehrere Biegefederelemente zu einer Biegefedereinrichtung kombiniert und miteinander in Wirkverbindung gebracht werden. Ein einzelnes Biegefederelement kann beispielsweise balkenförmig ausgestaltet sein und einen geraden oder geringfügig gekrümmten Verlauf aufweisen. Es sind auch Biegefederelemente bekannt, die einen komplex gekrümmten Verlauf und beispielsweise eine C-förmige oder S-förmige Formgebung bzw. mehrere abwechselnde und mäanderförmig ausgestaltete Krümmungen aufweisen.

Biegefederelemente können aus verschiedenen Materialien hergestellt werden. Herkömmliche Biegefederelemente sind beispielsweise oftmals aus einem geeigneten Federstahl hergestellt. Derartige Biegefederelemente können kostengünstig hergestellt werden, wobei die Formgebung der Biegefederelemente an die jeweilige Aufgabenstellung angepasst sein kann. Biegefederelemente aus Federstahl oder aus einem anderen geeigneten Metall sind widerstandsfähig und weisen vorteilhafte Federeigenschaften auf.

Es ist ebenfalls bekannt und für verschiedene Anwendungsbereiche bereits erprobt, Biegefederelemente aus einem geeigneten Faserkunststoffverbundmaterial herzustellen. Dabei wird üblicherweise ein Faserkunststoffverbundmaterial verwendet, bei dem quasiendlose Fasern in einem geeigneten Matrixmaterial aus Kunststoff eingebettet sind. Durch die Anordnung und Ausrichtung der einzelnen Fasern, welche maßgeblich für eine Zug- und Druckübertragung entlang des Biegefederelements verantwortlich sind, können vorteilhafte Federeigenschaften begünstigt werden. Dabei werden hauptsächlich über die Biegefederfasern in den Funktionsschichten je nach Verformung Zugkräfte oder Druckkräfte übertragen. In der Mittenebene, die auch als neutrale Faser oder Nulllinie bezeichnet wird, treten dagegen bei einer bestimmungsgemäßen Verformung keine Zug- oder Druckkräfte auf. Die auf beiden Seiten der Mittenebene angeordneten Funktionsschichten können einheitlich hergestellt sein und ineinander übergehen, sodass sich ein einstückiges Biegefederelement aus einem homogenen Faserverbundmaterial ergibt. Biegefederelemente aus einem Faserkunststoffverbundmaterial können im Vergleich zu Biegefederelementen aus Metall ein geringeres Gewicht und eine bessere Widerstandsfähigkeit gegenüber Umgebungsbedingungen und insbesondere gegenüber Feuchtigkeit aufweisen. Biegefederelemente aus einem geeigneten Faserkunststoffverbundmaterial können in vorteilhafter Weise bei Kraftfahrzeugen eingesetzt werden.

Wenn das Biegefederelement mit einer einheitlichen Dicke bzw. mit einem einheitlichen Abstand der beiden Funktionsschichten ausgebildet ist, muss die Dicke des Biegefederelements an die Zug- und Druckbelastung angepasst sein, die bei einer maximal vorgesehenen bestimmungsgemäßen Krafteinwirkung auf den Krümmungsabschnitt des Biegefederelements auftreten kann. In einem angrenzenden Längsabschnitt tritt dabei eine deutlich geringere Belastung auf, sodass das Biegefederelement bei einer einheitlichen Dicke in diesem Längsabschnitt überdimensioniert ist. Das Gewicht des Biegefederelements sowie der Materialaufwand wären dann übermäßig groß, was insbesondere im Hinblick auf eine üblicherweise angestrebte Leichtbauweise mit Faserkunststoffverbundmaterialien als nachteilig angesehen wird.

Die Herstellung von Biegefederelementen aus einem Faserkunststoffverbundmaterial ist oftmals mit einem hohen Herstellungsaufwand und damit einhergehend mit hohen Herstellungskosten verbunden. Dabei ist insbesondere bei Biegefederelementen mit einer sich verändernden Dicke der Aufwand ganz erheblich und hinsichtlich der Herstellungskosten oftmals ausschlaggebend, der für die Herrichtung einer großen Anzahl von unterschiedlich langen, vorkonfektionierten Streifen aus Faserkunststoffverbundmaterial bzw. Prepregs, deren Anordnung in einer Werkzeugform und deren anschließendes Verpressen anfällt.

Ein im Wesentlichen als ebene Blattfeder ausgestaltetes Biegefederelement ist beispielsweise in US 3,968,958 beschrieben. Die Konfektionierung der unterschiedlich langen, vorkonfektionierten Prepregs und insbesondere deren Anordnung in einer Werkzeugform sowie deren Fixierung während des unter Druck erfolgenden Aushärtungsvorgangs der Prepregs in der Werkzeugform ist mit einem erheblichen und oftmals nur manuell durchführbaren Aufwand verbunden. Durch die zwischen den äußeren Funktionsschichten angeordneten, kürzer ausgebildeten zusätzlichen Mittelschichten wird ein mittlerer Abschnitt der Blattfeder zusätzlich verstärkt. Eine ähnliche ebene Blattfeder ist auch in EP 005 916 A1 gezeigt und beschrieben.

Ein ringförmig ausgebildetes Biegefederelement aus Faserkunststoffmaterial ist aus US 4 942 075 A bekannt. Mehrfach gekrümmt verlaufende Biegefederelemente aus Faserkunststoffmaterial sind beispielsweise in DE 10 2015 012 334 B3 oder in DE 10 2008 057 463 B4 beschrieben.

Das Dokument DE 10 2008 057 463 B4 offenbart ein Biegefederelement aus einem Faserkunststoffverbundmaterial, wobei das Biegefederelement auf zwei einander gegenüberliegenden Seiten einer Mittenebene jeweils eine Funktionsschicht aus einem Faserkunststoffverbundmaterial aufweist, wobei Biegefederfasern innerhalb der jeweiligen Funktionsschicht zumindest bündelweise relativ zueinander parallel ausgerichtet sind und entlang einer Längsrichtung des Biegefederelements verlaufen, wobei das Biegefederelement mindestens einen Krümmungsabschnitt aufweist, in welchem die zwischen den beiden Funktionsschichten verlaufende Mittenebene des unbelasteten Biegefederelements in der Längsrichtung des Biegefederelements um mehr als 90° gekrümmt verläuft, wobei das Biegefederelement mindestens einen Längsabschnitt aufweist, in welchem die Mittenebene des unbelasteten Biegefederelements entweder keine nennenswerte Krümmung oder eine Krümmungsumkehr aufweist, und wobei bei einer bestimmungsgemäßen Auslenkung des Biegefederelements ein in dem Krümmungsabschnitt nach außen gerichtet angeordneter Funktionsschichtabschnitt auf Zug beansprucht und ein in dem Krümmungsabschnitt gegenüberliegender und nach innen gerichteter Funktionsschichtabschnitt auf Druck beansprucht ist, wobei innerhalb des mindestens einen Krümmungsabschnitts ein erster Volumenanteil von Biegefederfasern in den Funktionsschichten geringer als ein zweiter Volumenanteil von Biegefederfasern in den Funktionsschichten innerhalb des mindestens einen Längsabschnitts ist.

Es wird deshalb als eine Aufgabe der vorliegenden Erfindung angesehen, ein Biegefederelement aus einem Kunststoffverbundmaterial so auszugestalten, dass das Biegefederelement kostengünstig hergestellt werden kann, in einfacher Weise in verschiedenen Abschnitten an die üblicherweise auftretenden Beanspruchungen angepasst sein kann und möglichst vorteilhafte Federeigenschaften aufweisen kann.

Diese Aufgabe wird erfindungsgemäß dadurch gelöst, dass das Biegefederelement in dem mindestens einen Längsabschnitt mindestens eine parallel zu den beiden Funktionsschichten und in der Längsrichtung verlaufende

Matrixmaterialabführschicht aufweist, die zumindest einen Anteil von Abführschichtfasern aufweist, die abweichend von der Längsrichtung des Biegefederelements ausgerichtet sind, und dass innerhalb des mindestens einen Krümmungsabschnitts ein erster Volumenanteil von Biegefederfasern in den Funktionsschichten geringer, vorzugsweise um mehrere % geringer als ein zweiter Volumenanteil von Biegefederfasern in den Funktionsschichten innerhalb des mindestens einen Längsabschnitts ist.

Es hat sich gezeigt, dass mit geringem Material- und Herstellungsaufwand besonders vorteilhafte

Federeigenschaften in einfacher Weise dadurch ermöglicht werden können, dass der Volumenanteil von Biegefederfasern in den Funktionsschichten entlang der Längsrichtung des Biegefederelements abschnittsweise an die jeweils üblicherweise auftretenden Belastungen angepasst ist und insbesondere dadurch, dass der Volumenanteil von Biegefederfasern in den Längsabschnitten höher und gegebenenfalls deutlich höher als in dem mindestens einen Krümmungsabschnitt ist. In vorteilhafter Weise ist vorgesehen, dass der Volumenanteil von Biegefederfasern in allen Längsabschnitten höher als in allen

Krümmungsabschnitten ist. Durch den unterschiedlichen Volumenanteil der Biegefederfasern in den Längsabschnitten im Vergleich zu den Krümmungsabschnitten können für die Biegefeder wichtige Eigenschaften wie beispielsweise die Biegesteifigkeit oder Torsionssteifigkeit unterschiedlich vorgegeben und an die jeweilige Funktion der Längsabschnitte und Krümmungsabschnitte angepasst sein.

Ein erfindungsgemäßes Biegefederelement kann beispielsweise dadurch hergestellt werden, dass vorkonfigurierte Prepregs mit unidirektionalen, endlosen und in Längsrichtung des Biegefederelements ausgerichteten Biegefederfasern in eine Werkzeugform eingelegt werden. Die Prepregs werden gegebenenfalls mit zusätzlich zugefügtem Matrixmaterial getränkt sowie erwärmt und verpresst, bis das Matrixmaterial aushärtet. Es hat sich gezeigt, dass das noch fließfähige Matrixmaterial innerhalb der Funktionsschichten im Wesentlichen entlang der darin eingebetteten Biegefederfasern fließt und quer dazu das Matrixmaterial mit einer deutlich geringeren Strömungsgeschwindigkeit fließen kann, da die Biegefederfasern das Matrixmaterial behindern und zurückhalten.

Um den Volumenanteil von Biegefederfasern in unterschiedlichen Abschnitten des Biegefederelements unterschiedlich vorgeben zu können ist es erfindungsgemäß vorgesehen, dass in Abschnitten mit einem höheren Volumenanteil eine Matrixmaterialabführschicht angeordnet ist, die bei einem Verpressen des Biegefederelements während eines Aushärtevorgangs eines Matrixmaterials im Vergleich zu den angrenzenden Funktionsschichten einen wesentlich geringeren Strömungswiderstand quer zur Längsrichtung aufweisen. Dadurch kann während des Verpressens das noch fließfähige Matrixmaterial in den Längsabschnitten zunächst in die Matrixmaterialabführschicht fließen und anschließend rasch seitlich aus dem Biegefederelement herausströmen, während es in den Krümmungsabschnitten durch die in Längsrichtung ausgerichteten Biegefederfasern in den Funktionsschichten im Wesentlichen entlang der Längsrichtung des Biegefederelements strömen kann, jedoch nicht oder jedenfalls nur zu einem geringen Anteil seitlich austreten kann. Durch eine erhöhte Abführung von Matrixmaterial innerhalb der Längsabschnitte wird dort der Anteil der Biegefederfasern im Vergleich zu dem Matrixmaterial erhöht, während sich der Anteil der Biegefederfasern relativ zu dem Matrixmaterial in den Krümmungsabschnitten während des Verpressens kaum verändert und maßgeblich durch die vorkonfigurierten Prepregs und gegebenenfalls eine zusätzliche Zugabe von Matrixmaterial vorgegeben wird.

Die Verwendung einer Matrixmaterialabführschicht hat sich als wesentlich effektiver und besser kontrollierbar als andere Verfahren wie beispielsweise ein unterschiedlich großer Verpressdruck entlang der Längsrichtung des Biegefederelements herausgestellt. Zudem können die Funktionsschichten des Biegefederelements aus durchgehenden und sich über die gesamte Länge des Biegefederelements erstreckende Streifen aus einem einheitlichen Prepregmaterial zusammengesetzt werden, ohne dass abschnittsweise unterschiedliche Prepregs oder eine unterschiedliche Anzahl von Prepreg-Lagen vorgegeben und eingelegt werden müssen. Es können auch ausschließlich Prepregs mit endlosen und in Längsrichtung sich über das gesamte Biegefederelement erstreckenden Biegefederfasern verwendet werden, wodurch mit geringem Materialaufwand hochwertige Biegefederelemente hergestellt werden können.

Gemäß einer Ausgestaltung des Erfindungsgedankens ist vorgesehen, dass der erste Volumenanteil von Biegefederfasern in dem mindestens einen Krümmungsabschnitt geringer als 55%, vorzugsweise geringer als 52% ist, und dass der zweite Volumenanteil von Biegefederfasern in dem mindestens einen Längsabschnitt größer als 55%, vorzugsweise größer als 58% ist. Es hat sich gezeigt, dass ein Volumenanteil von Biegefederfasern innerhalb der Krümmungsabschnitte von etwa 50% sowie ein Volumenanteil von Biegefederfasern innerhalb der Längsabschnitte von etwa 60% für viele Anwendungsfälle vorteilhafte Eigenschaften des Biegefederelements bei einem vergleichsweise sehr geringen Eigengewicht des Biegefederelements ermöglicht.

Die Matrixmaterialabführschicht kann aus verschiedenen Materialen bestehen oder aus verschiedenen Materialkomponenten zusammengesetzt sein. Eine wesentliche Anforderung an eine besonders geeignete Matrixmaterialabführschicht ist eine vergleichsweise hohe Porosität und eine hohe Verformungsfestigkeit, sodass die Matrixmaterialabführschicht während des Verpressens nicht übermäßig zusammengepresst und verdichtet wird, sodass das fließfähige Matrixmaterial rasch durch Hohlräume innerhalb der Matrixmaterialabführschicht fließen kann, bis es seitlich austreten kann.

In vorteilhafter Weise kann vorgesehen sein, dass die Matrixmaterialabführschicht Abführschichtfasern aufweist, die in zwei oder mehr zueinander in einem Winkel verlaufenden Richtungen ausgerichtet sind, wobei eine gemittelte Ausrichtung der Abführschichtfasern in der Längsrichtung des Biegefederelements ausgerichtet ist. Als gemittelte Ausrichtung der Abführschichtfasern wird eine Richtung bezeichnet, die sich durch eine Überlagerung aller einzelner Ausrichtungen der einzelnen Abführschichtfasern ergeben würde. Die gemittelte Ausrichtung entspricht beispielsweise der Längsrichtung des Biegefederelements, wenn gleichviele Abführschichtfasern in Längsrichtung in gleicher Weise zu einer ersten Längskante sowie zu einer gegenüberliegenden zweiten Längskante des Biegefederelements hin ausgerichtet sind und verlaufen. Die Abführschichtfasern können beispielsweise in einem Winkel von 90° relativ zueinander ausgerichtet sein. Um zu vermeiden, dass für das Matrixmaterial während des Verpressens quer zur Längsrichtung eine Vorzugsrichtung vorgegeben wird, die zu einer quer zur Längsrichtung ausgebildeten Inhomogenität des Anteils an Biegefederfasern führen könnte, sollten die Abführschichtfasern symmetrisch zu beiden Längskanten ausgerichtet sein, also beispielsweise jeweils einen Winkel zu den Längskanten von 45° aufweisen, oder entweder in Längsrichtung oder quer zur Längsrichtung des Biegefederelements ausgerichtet sein. Durch den Anteil an Abführschichtfasern, die quer zur Längsrichtung des Biegefederelements ausgerichtet sind, wird der Strömungswiderstand quer zur Längsrichtung verringert, sodass mehr Matrixmaterial quer zur Längsrichtung strömt und seitlich austreten kann. Es ist ebenfalls denkbar, dass die Abführschichtfasern innerhalb der Matrixmaterialabführschicht in einem Winkel zwischen 0° und 90° zur Längsrichtung gleichverteilt zu beiden Längsseiten hin ausgerichtet sind, beispielsweise einen Winkel von +20° oder -20° relativ zur Längsrichtung aufweisen.

Einer vorteilhaften Ausgestaltung des Erfindungsgedankens zufolge ist vorgesehen, dass die Abführschichtfasern in der Matrixmaterialabführschicht eine isotrope Ausrichtung aufweisen. Die Abführschichtfasern können ungerichtet innerhalb der Matrixmaterialabführschicht angeordnet sein. Es können auch vergleichsweise kurze Abführschichtfasern in der Matrixmaterialabführschicht verwendet werden. Optional kann vorgesehen sein, dass eine mittlere Länge der Abführschichtfasern in der Matrixmaterialabführschicht geringer als eine quer zu der Längsrichtung gemessene Breite des Biegefederelements ist. Die mittlere Länge der Abführschichtfasern kann auch deutlich kürzer als eine quer zu der Längsrichtung des Biegefederelements gemessene Breite des Biegefederelements sein und beispielsweise lediglich wenige Millimeter betragen.

Bei der Matrixmaterialabführschicht kann es sich beispielsweise um ein Gelege oder ein Gewirk handeln. Es kann auch ein Textil sein. In besonders vorteilhafter Weise ist vorgesehen, dass die Matrixmaterialabführschicht ein Vliesmaterial aufweist. Die einzelnen Abführschichtfasern können auf verschiedene Weisen mit oder ohne ein Matrixmaterial zu dem Vliesmaterial verfestigt sein. Das Vliesmaterial kann mit demselben Matrixmaterial wie die Funktionsschichten oder mit einem anderen Matrixmaterial getränkt sein.

Es hat sich gezeigt, dass die Verwendung eines Vliesmaterials mit einem Flächengewicht von weniger als 200 g/m², vorzugsweise von weniger als 120 g/mm² und besonders vorzugsweise von weniger als 80 g/mm² besonders vorteilhaft ist.

Gemäß einer Ausgestaltung des Erfindungsgedankens ist vorgesehen, dass in dem mindestens einen Krümmungsabschnitt des Biegefederelements ein zwischen den beiden Funktionsschichten angeordnetes Abstandserweiterungselement aus einem anderen Material als die beiden Funktionsschichten aufweist. Durch das Abstandserweiterungselement kann eine quer zu der Längsrichtung des Biegefederelements gemessene Dicke des Biegefederelements vergrößert werden. Die durch die Biegebeanspruchung des Biegefederelements bei einer bestimmungsgemäßen Belastung auftretenden Verformungskräfte können durch das Abstandserweiterungselement von einem dadurch verdickten Krümmungsabschnitt besonders vorteilhaft aufgenommen und in Federenergie umgewandelt werden. Indem ein quer zu der Längsrichtung gemessener Abstand der Funktionsschichten und damit ein Abstand der Funktionsschichten zu der Mittenebene und der darin verlaufenden neutralen Faser vergrößert wird, weist das Biegefederelement in dem Krümmungsabschnitt einen größeren Verformungswiderstand auf als in einem angrenzenden Längsabschnitt, ohne dass zu diesem Zweck zusätzliche Mittelschichten zwischen den Funktionsschichten angeordnet werden müssen, die sich nur über den Krümmungsabschnitt hinweg erstrecken.

Das in dem Krümmungsabschnitt zwischen den beiden Funktionsschichten angeordnete Abstandserweiterungselement weist dabei erfindungsgemäß in Längsrichtung eine kontinuierlich sich verändernde Dicke auf, so dass das Abstandserweiterungselement ausgehend von einem spitz auslaufenden ersten Ende kontinuierlich dicker wird und in einem mittleren Bereich eine maximale Dicke aufweist, um zu dem gegenüberliegenden zweiten Ende sich zunehmend zu verjüngen und ebenfalls wieder spitz auszulaufen. Auf diese Weise können abrupte Dickenänderungen in dem Biegefederelement vermieden werden, die erfahrungsgemäß zu Belastungsspitzen und einer oftmals sehr hohen und gegebenenfalls übermäßigen Beanspruchung während einer bestimmungsgemäßen Verwendung des Biegefederelements führen können.

Es ist vorteilhaft, wenn das Abstandserweiterungselement aus einem möglichst schubfesten und schubsteifen Material hergestellt ist. Es ist grundsätzlich denkbar, dass das Abstandserweiterungselement beispielsweise aus Holz oder aus einem geeigneten Kunststoffmaterial hergestellt ist. Das Abstandserweiterungselement kann vorkonfektioniert bzw. vorab hergestellt sein, wobei das Abstandserweiterungselement zweckmäßigerweise bereits eine Formgebung aufweist, die an eine Formgebung bzw. an einen Verlauf des unbelasteten Biegefederelements innerhalb des Krümmungsabschnitts angepasst ist.

Gemäß einer vorteilhaften Ausgestaltung des Erfindungsgedankens ist vorgesehen, dass das Material des Abstandserweiterungselements ein zweites Faserkunststoffverbundmaterial mit Fasern ist, deren Länge jeweils weniger als 30 mm, vorzugsweise weniger als 10 mm und besonders vorzugsweise weniger als 1 mm beträgt. Das zweite Faserkunststoffverbundmaterial mit derart kurzen Fasern lässt sich besonders vorteilhaft und kostengünstig bearbeiten und in die für das Abstandserweiterungselement gewünschte Formgebung bringen. Die einzelnen Fasern können dabei keine Zug- oder Druckkräfte über große Bereiche hinweg übertragen, was sich jedoch als nicht notwendig herausgestellt hat. Durch die Anordnung eines Abstandserweiterungselements zwischen zwei außen liegenden Funktionsschichten kann in dem Krümmungsabschnitt eine quer zu einer Längsrichtung des Biegefederelements gemessene Dicke des Biegefederelements an die bestimmungsgemäße Biegebeanspruchung des Biegefederelements angepasst werden und wesentlich dicker als die Gesamtdicke der beiden Funktionsschichten ausgestaltet sein. Das aus einem zweiten Faserkunststoffverbundmaterial hergestellte Abstandserweiterungselement kann ein geringes Eigengewicht aufweisen. Durch das zusätzliche zweite Faserkunststoffverbundmaterial des Abstandserweiterungselements können die beiden wesentlich kostenintensiveren Funktionsschichten des Biegefederelements in dem Krümmungsabschnitt vergleichsweise dünn ausgebildet sein und an die bestimmungsgemäße bzw. maximal erwartete Zug- und Druckbeanspruchung der Funktionsschichten des Biegefederelements innerhalb des Krümmungsabschnitts angepasst sein.

Es hat sich herausgestellt, dass das Biegefederelement besonders vorteilhafte Federeigenschaften aufweist, wenn die Fasern in dem zweiten Faserkunststoffverbundmaterial ungerichtet angeordnet sind. Eine derartige ungerichtete Anordnung der in das Matrixmaterial des zweiten Faserkunststoffverbundmaterials eingebetteten Fasern wird auch als Wirrfasern bezeichnet. In vielen Anwendungsfällen gilt, dass die Federeigenschaften umso vorteilhafter ausgestaltet werden können, je homogener die Fasern in dem zweiten Faserkunststoffverbundmaterial verteilt sind. Je kürzer die Länge der einzelnen Fasern in dem zweiten Faserkunststoffverbundmaterial ist, umso einfacher können eine erfindungsgemäß homogene Verteilung der Fasern in dem Abstandserweiterungselement sowie eine homogen verteile Ausrichtung der einzelnen Fasern zueinander herbeigeführt werden.

Gemäß einer besonders vorteilhaften Ausgestaltung des Erfindungsgedankens ist vorgesehen, dass das zweite Faserkunststoffverbundmaterial ein mit den beiden Funktionsschichten übereinstimmendes Kunststoffmatrixmaterial aufweist. Durch die Verwendung desselben Kunststoffmatrixmaterials für die Funktionsschichten und für das zwischen den Funktionsschichten angeordnete Abstandserweiterungselement kann eine stoffschlüssige und übergangslose Verbindung des Abstandserweiterungselements mit den auf beiden Seiten angrenzenden Funktionsschichten bewirkt werden. Ein unbeabsichtigtes Ablösen der Funktionsschichten von dem Abstandserweiterungselement wird dadurch auch bei hohen Belastungen des Biegefederelements vermieden und zumindest erschwert.

Ein Abstandserweiterungselement kann durch Einbringen eines pastösen Ausgangsmaterials zwischen bereits vorgefertigte und gegebenenfalls vorgeformte Funktionsschichten hergestellt werden. Dabei kann das Abstandserweiterungselement je nach dem verwendeten Material auch durch bereits bekannte Spritzgussverfahren hergestellt werden. Anschließend können die Funktionsschichten zusammen mit den dazwischen angeordneten Abstandserweiterungselement verbunden und dadurch das gewünschte Biegefederelement hergestellt werden. Das Abstandserweiterungselement kann auch durch bereits bekannte Spritzgussverfahren zwischen die bereits in einer Werkzeugform angeordneten Funktionsschichten in den Krümmungsabschnitt eingebracht werden. Es ist ebenso denkbar, dass das Abstandserweiterungselement in einem gesonderten Arbeitsschritt getrennt von den Funktionsschichten hergestellt wird. Anschließend können die Funktionsschichten zusammen mit dem dazwischen angeordneten Abstandserweiterungselement verbunden und zu dem gewünschten Biegefederelement geformt und verfestigt werden.

Optional ist vorgesehen, dass die Mittenebene in dem mindestens einen Krümmungsabschnitt des Biegefederelements eine Richtungsänderung von mehr als 90°, vorzugsweise von mehr als 150° und besonders vorzugsweise von näherungsweise 180° aufweist. Bei einem Krümmungsabschnitt, dessen Verlauf in Längsrichtung sich um mehr als 150° und vorzugsweise um etwa 180° ändert, kann durch eine quer zu den beiden Endbereichen des Krümmungsabschnitts gerichtete Krafteinwirkung durch eine bestimmungsgemäße Verformung des Biegefederelements innerhalb des Krümmungsabschnitts besonders wirkungsvoll aufgenommen und bei einem geringen Raumbedarf eine hohe Federrückstellkraft und damit eine große Federwirkung erzeugt werden.

In vorteilhafter Weise ist gemäß einer erfindungsgemäßen Variante vorgesehen, dass das Biegefederelement mindestens zwei durch einen Längsabschnitt voneinander getrennte und in unterschiedliche Richtungen gekrümmte Krümmungsabschnitte aufweist, sodass die Mittenebene über diese beiden Krümmungsabschnitte hinweg einen S-förmigen Verlauf aufweist. Biegefederelemente mit mindestens einem S-förmig ausgebildeten Federabschnitt und insbesondere Biegefederelemente mit zwei oder mehr aneinander angrenzend ausgebildeten S-förmigen Federabschnitten ermöglichen eine für viele Anwendungsfälle besonders vorteilhafte Kombination einer hohen Federkraft mit einem möglichst geringen Raumbedarf. Mehrere ähnliche oder baugleiche Biegefederelemente können zu einer Biegefedereinrichtung kombiniert werden, die vorteilhafte Federeigenschaften mit einer hohen Widerstandsfähigkeit gegenüber Umwelteinflüssen und mit einem geringen Eigengewicht kombinieren. Ein erfindungsgemäßes Biegefederelement oder eine aus mehreren Biegefederelementen kombinierte Biegefedereinrichtung eignet sich deshalb auch und in besonderer Weise für die Verwendung als Federelement in Kraftfahrzeugen.

Die Funktionsschichten weisen besonders vorteilhafte Eigenschaften auf, wenn das erste Faserkunststoffverbundmaterial der beiden Funktionsschichten unidirektional in der Längsrichtung des Biegefederelements ausgerichtete Fasern aufweist. Durch die unidirektional und in der Längsrichtung ausgerichteten Fasern können die Funktionsschichten besonders hohe Zug- und Druckkräfte aufnehmen. Dabei können die Funktionsschichten entweder parallel zu der Längsrichtung verlaufende oder in einem vorzugsweise in einem spitzen Winkel zur Längsrichtung verlaufende Fasern oder Faserbündel aufweisen. Geeignete Fasern können beispielsweise Glasfasern, Kohlenstofffasern, Keramikfasern, Basaltfasern, Metallfasern oder aber auch Naturfasern sein. Ein geeignetes Matrixmaterial kann ein an die jeweiligen Fasern angepasstes Kunststoffmaterial wie beispielsweise ein geeignetes Duromer, Elastomer oder Thermoplast sein. Das Abstandserweiterungselement kann gleiche oder aus einem anderen Material hergestellte Fasern wie die Funktionsschichten aufweisen.

Optional ist vorgesehen, dass das erste Faserkunststoffverbundmaterial Fasern aufweist, deren Länge sich in Längsrichtung über das ganze Biegefederelement hinweg erstreckt. Eine auf die Funktionsschichten einwirkende Zug- oder Druckbelastung wird dadurch von den quasi endlosen Fasern über das gesamte Biegefederelement verteilt, wodurch eine Bruchgefahr bei einer übermäßigen Belastung reduziert wird.

Nachfolgend wird ein exemplarisches Ausführungsbeispiel näher erläutert, welches in der Zeichnung schematisch dargestellt ist. Es zeigt:
Figur 1 eine schematische Schnittansicht eines Biegefederelements mit einem mäanderförmigen Verlauf mit mehreren Krümmungsabschnitten und Längsabschnitten,
Figur 2 eine schematische Schnittansicht des in Figur 1 gezeigten Biegefederelements längs einer Linie II-II in Figur 1,
Figur 3 eine schematische Schnittansicht des in Figur 1 gezeigten Biegefederelements längs einer Linie III-III in Figur 1,
Figur 4 eine schematische Darstellung einer Schnittansicht eines Längsabschnitts eines erfindungsgemäßen Biegefederelements während des Verpressens in einer Werkzeugform,
Figur 5 eine schematische Schnittansicht eines abweichend ausgestalteten Biegefederelements mit mehreren Krümmungsabschnitten und Längsabschnitten, wobei in den Krümmungsabschnitten jeweils ein Abstandserweiterungselement angeordnet ist, welches eine quer zur Längsrichtung gemessene Dicke des Biegefederelements innerhalb des betreffenden Krümmungsabschnitts vergrößert, und
Figur 6 eine schematische Schnittansicht des in Figur 5 gezeigten Biegefederelements längs einer Linie VI-VI in Figur 5.

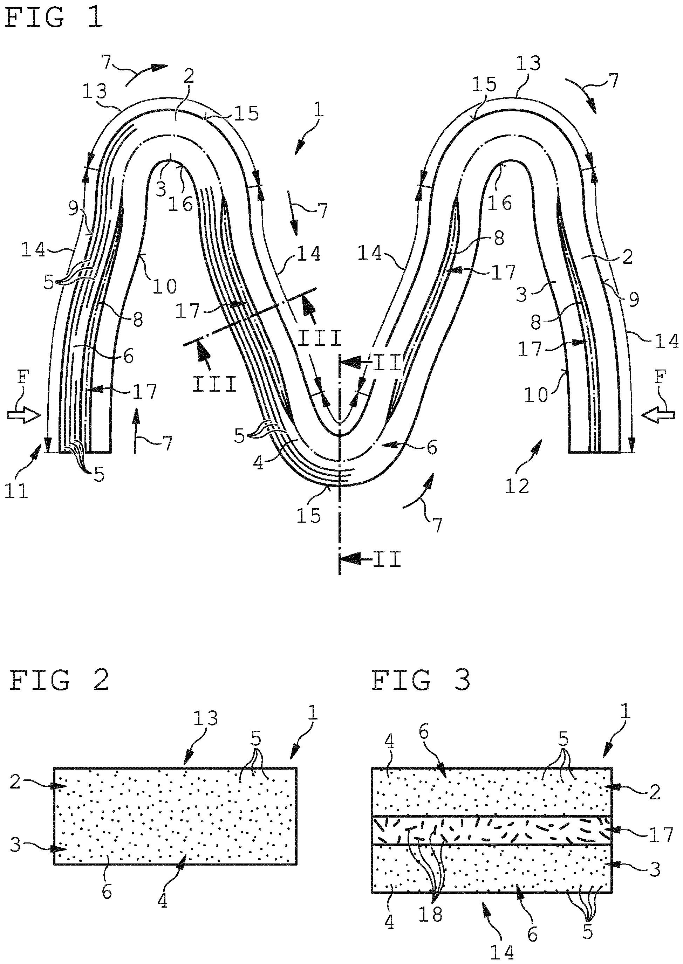

Ein in den Figuren 1 bis 3 in verschiedenen Ansichten dargestelltes Biegefederelement 1 weist zwei Funktionsschichten 2, 3 auf, die jeweils aus einem ersten Faserkunststoffverbundmaterial 4 hergestellt sind. In den beiden Funktionsschichten 2, 3 sind jeweils endlose Biegefederfasern 5 in einem Matrixmaterial 6 aus Kunststoff so angeordnet, dass die Biegefederfasern 5 sich in einer Längsrichtung 7 über das gesamte Biegefederelement 1 hinweg erstrecken. In Figur 1 sind zur Verdeutlichung lediglich einige Biegefederfasern 5 und lediglich über einen kurzen Abschnitt in Längsrichtung 7 dargestellt. Die Längsrichtung 7 entspricht dem Verlauf einer Mittenebene 8, die zwischen zwei nach außen gerichteten Außenseiten 9, 10 der beiden Funktionsschichten 2, 3 jeweils in einem gleichen Abstand zu den beiden Außenseiten 9, 10 verläuft. Bei dem exemplarisch dargestellten Ausführungsbeispiel entspricht der Verlauf der Mittenebene 8 auch dem Verlauf einer neutralen Faser, die bei einer bestimmungsgemäßen Krafteinwirkung F jeweils quer zu der Längsrichtung 7 auf beide Endbereiche 11, 12 des Biegefederelements 1 nicht belastet wird.

Die Mittenebene 8 weist einen mäanderförmigen Verlauf auf. Das Biegefederelement 1 weist drei Krümmungsabschnitte 13 mit einem sich um etwa 180° verändernden gekrümmten Verlauf auf, die jeweils zwischen zwei Längsabschnitten 14 angeordnet sind. Die beiden Endbereiche 11, 12 werden jeweils durch einen Längsabschnitt 14 gebildet, in welchen das Biegefederelement 1 einen näherungsweise gradlinigen bzw. sehr flachen und lediglich etwas S-förmigen Verlauf der Mittenebene 8 aufweist. Zwischen den drei Krümmungsabschnitten 13 ist ebenfalls ein Längsabschnitt 14 ausgebildet, in welchem die Mittenebene 8 näherungsweise gradlinig bzw. etwas S-förmig verläuft und eine Krümmungsumkehr von einem ersten Krümmungsabschnitt 13 zu einem benachbarten zweiten Krümmungsabschnitt 13 aufweist.

Die in das Matrixmaterial 6 der Funktionsschichten 2, 3 eingebetteten Biegefederfasern 5 verlaufen im Wesentlichen parallel zu den jeweiligen Außenseiten 9, 10 der betreffenden Funktionsschicht 2, 3 und erstrecken sich in Längsrichtung 7 über das gesamte Biegefederelement 1. Die Ausrichtung der einzelnen Fasern 5 ist demzufolge bei den in den Figuren 2 und 3 dargestellten Schnittansichten senkrecht zur Abbildungsebene und verläuft bei der in Figur 1 dargestellten Schnittansicht innerhalb der Abbildungsebene. Die Biegefederfasern 5 werden bei einer bestimmungsgemäß auf das Biegefederelement einwirkenden Kraft F im Wesentlichen entlang der in dem jeweiligen Krümmungsabschnitt 13 nach außen gerichteten Außenseitenabschnitte 15 auf Zug und entlang der in dem Krümmungsabschnitt 13 nach innen gerichteten Außenseitenabschnitte 16 auf Druck beansprucht. Je näher die Biegefederasern 5 an den jeweiligen Außenseiten 9,0 angeordnet sind, umso höher sind die bei einer bestimmungsgemäßen Verformung auftretenden Zug- oder Druckkräfte, die auf die Biegefederfasern 5 einwirken.

In den Längsabschnitten 14 ist zwischen den beiden Funktionsschichten 2, 3 im Bereich der Mittenebene 8 jeweils eine Matrixmaterialabführschicht 17 angeordnet. Die Matrixmaterialabführschicht 17 besteht aus einer weniger als 1 mm dünnen Vliesschicht mit einem Flächengewicht von etwa 100 g/mm². Die Vliesschicht besteht aus einem verfestigten Gelege von Abführschichtfasern 18, die gleichmäßig in der Vliesschicht verteilt sind und ungerichtet und isotrop bzw. wirr und nicht geradlinig verlaufend ausgerichtet sind. In den Figuren ist die Matrixmaterialabführschicht 17 zur Verdeutlichung nicht maßstabsgetreu und deutlich dicker dargestellt.

In Figur 2 ist eine Schnittansicht durch einen Krümmungsabschnitt 13 des Biegefederelements 1 dargestellt. Die beiden Funktionsschichten 2, 3 sind nicht voneinander getrennt, sondern einstückig und ohne Grenzfläche zueinander ausgebildet, sodass das Biegefederelement 1 in dem Krümmungsabschnitt 13 aus einem homogen ausgebildeten Faserverbundmaterial besteht, wobei die Biegefederfasern 5 senkrecht zur Abbildungsebene ausgerichtet sind.

In Figur 2 ist eine Schnittansicht durch einen Längsabschnitt 14 des Biegefederelements 1 dargestellt. Zwischen den beiden Funktionsschichten 2, 3 ist die Materialmatrixabführschicht 17 bzw. die Vliesschicht angeordnet. Die einzelnen Abführschichtfasern 18 verlaufen wirr und ungerichtet innerhalb der Matrixmaterialabführschicht 17.

Um das erfindungsgemäße Biegefederelement 1 herzustellen werden für jede Funktionsschicht 2, 3 eine Anzahl von Prepregs mit unidirektional in Längsrichtung 7 ausgerichteten endlosen Biegefederfasern 5 in ein U-förmig ausgebildetes Unterteil 19 einer Werkzeugform 20 eingelegt. Zwischen den beiden Funktionsschichten 2, 3 wird die Matrixmaterialabführschicht 17 eingelegt und angeordnet. Zum Verpressen des Biegefederelements 1 wird ein Druckstempel 21 der Werkzeugform 20 in das Unterteil 19 eingeführt und das Biegefederelement 1 zwischen dem Druckstempel 21 und dem Unterteil 19 der Werkzeugform 20 zusammengedrückt. Während eines Aushärtevorgangs wird das zunächst flüssige Matrixmaterial 6, üblicherweise ein geeignetes Harz, verfestigt und ausgehärtet, um das Biegefederelement 1 mit den gewünschten Eigenschaften zu bilden.

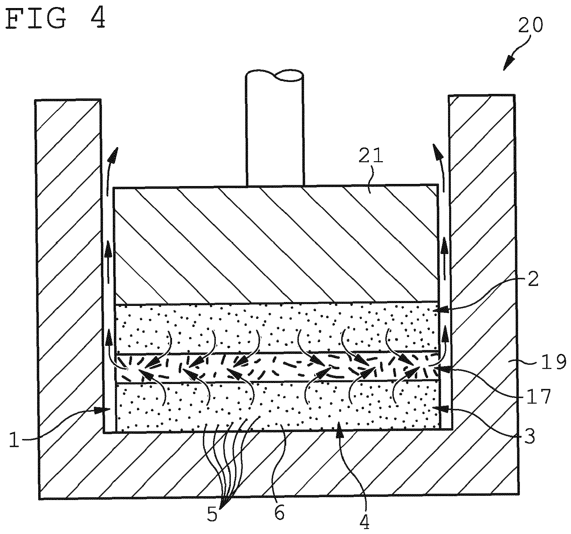

Das noch fließfähige Matrixmaterial 6 wird zunächst von der Matrixmaterialabführschicht 17 aufgesogen. Durch das Verpressen strömt zusätzliches Matrixmaterial 6 in die Matrixmaterialabführschicht 17. Da das Matrixmaterial 6 innerhalb der Matrixmaterialabführschicht quer zu der Längsrichtung 7 und damit in der Figur 4 in einer Richtung in der Abbildungsebene besonders rasch und mit einem vergleichsweise geringen Strömungswiderstand strömen kann, strömt das Matrixmaterial 6 bei zunehmendem Verpressdruck seitlich aus der Matrixmaterialabführschicht 17 heraus und wird durch einen Spalt zwischen dem Druckstempel 21 und dem umgebenden Unterteil 19 der Werkzeugform 20 aus der Werkzeugform 20 herausgepresst, wie es durch die Pfeile in Figur 4 angedeutet ist. Dabei wird innerhalb der Längsabschnitte 14 wegen der nur dort angeordneten Matrixmaterialabführschicht 17 deutlich mehr Matrixmaterial 6 als innerhalb der Krümmungsabschnitte 13 seitlich herausgepresst und abgeführt. Der verbleibende Volumenanteil des Matrixmaterials 6 ist in den Längsabschnitten 14 dadurch geringer als in den Krümmungsabschnitten 13. Dadurch ist der Volumenanteil der Biegefederfasern 5 in den Krümmungsabschnitten 13 geringer als in den Längsabschnitten 14.

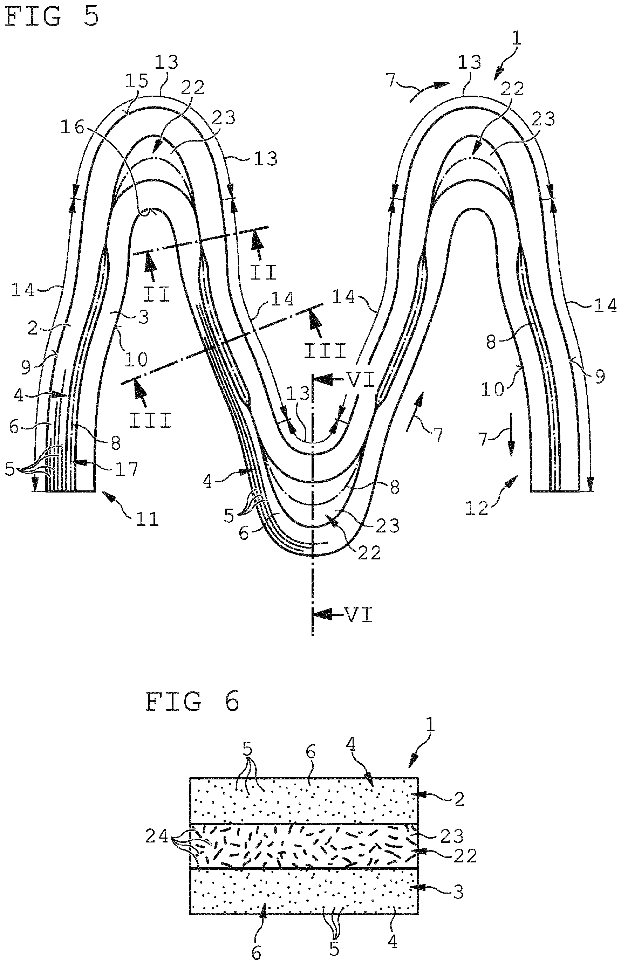

Bei dem in Figur 5 lediglich schematisch dargestellten Ausführungsbeispiel eines abweichend ausgestalteten Biegefederelements 1 mit mehreren Krümmungsabschnitten 13 und Längsabschnitten 14 ist in den Krümmungsabschnitten 13 jeweils ein Abstandserweiterungselement 22 angeordnet ist, welches eine quer zur Längsrichtung 7 gemessene Dicke des Biegefederelements 1 innerhalb des betreffenden Krümmungsabschnitts 13 vergrößert. Das Abstandserweiterungselement 22 bewirkt einen größeren Abstand zwischen den nach außen gerichteten Außenseitenabschnitten 15 und den nach innen gerichteten Außenseitenabschnitten 16 der beiden Funktionsschichten 2, 3 innerhalb der Krümmungsabschnitte 13 und bewirkt dadurch vorteilhafte Federeigenschaften des Biegefederelements 1 im Bereich des betreffenden Krümmungsabschnitts 13.

Die Abstandserweiterungselemente 22 weisen eine näherungsweise sichelförmige Formgebung auf. Das in dem jeweiligen Krümmungsabschnitt 13 zwischen den beiden Funktionsschichten 2, 3 angeordnete Abstandserweiterungselement 22 weist dabei erfindungsgemäß in Längsrichtung 7 eine kontinuierlich sich verändernde Dicke auf, so dass das Abstandserweiterungselement 22 ausgehend von einem spitz auslaufenden ersten Ende kontinuierlich dicker wird und in einem mittleren Bereich eine maximale Dicke aufweist, um zu dem gegenüberliegenden zweiten Ende sich zunehmend zu verjüngen und ebenfalls wieder spitz auszulaufen. Auf diese Weise können abrupte Dickenänderungen in dem Biegefederelement 1 vermieden werden, die erfahrungsgemäß zu Belastungsspitzen und einer oftmals sehr hohen und gegebenenfalls übermäßigen Beanspruchung während einer bestimmungsgemäßen Verwendung des Biegefederelements 1 führen können. Die beiden Abstandserweiterungselemente 22 müssen nicht notwendigerweise symmetrisch zur Mittenebene 8 ausgestaltet sein.

Jedes der Abstandserweiterungselemente 22 ist aus einem zweiten Faserkunststoffverbundmaterial 23 hergestellt. Das zweite Faserkunststoffverbundmaterial 23 weist das gleiche Matrixmaterial 6 wie das erste Faserkunststoffverbundmaterial 4 auf, sodass sich die Abstandserweiterungselemente 22 stoffschlüssig und homogen mit den beiden angrenzenden Funktionsschichten 2, 3 verbinden, ohne dass sich die mechanische Festigkeit des Biegefederelements 1 eventuell beeinträchtigende Grenzflächen zwischen den Abstandserweiterungselementen 22 und den angrenzenden Funktionsschichten 2, 3 ausbilden.

Die in Figur 5 eingetragenen Schnittansichten II-II und III-III entsprechen den in den Figuren 2 und 3 dargestellten Schnittansichten. In Figur 6 ist eine Schnittansicht VI-VI in einem Krümmungsabschnitt 13 mit einem darin eingebetteten Abstandserweiterungselement 22 längs einer Schnittlinie VI-VI in Figur 5 dargestellt. In das Matrixmaterial 6 des zweiten Faserkunststoffverbundmaterials 23 sind kurze Fasern 24 mit einer vorzugsweise einheitlichen Länge zwischen 1 mm und 5 mm angeordnet. Die kurzen Fasern 24 sind ungerichtet in den Abstandserweiterungselementen 22 ausgerichtet, sodass eine im Wesentlichen homogene Verteilung und in allen Richtungen ausgerichtete Verteilung der kurzen Fasern 23 in dem Matrixmaterial 6 des zweiten Faserkunststoffverbundmaterials 23 vorliegt.

Die Abmessungen der Abstandserweiterungselemente 22 sind insbesondere hinsichtlich der jeweiligen Dicke quer zu dem Verlauf der Mittenebene 8 so bemessen, dass das Biegefederelement 1 innerhalb des vorgesehenen Bereichs der üblicherweise auftretenden Krafteinwirkung vorteilhafte Federeigenschaften aufweist und eine Beschädigung des Biegefederelements 1 weitestgehend ausgeschlossen ist. Gleichzeitig sind auch die Funktionsschichten 2, 3 so dimensioniert, dass eine bestimmungsgemäße Verwendung des Biegefederelements 1 über die vorgesehene Verwendungsdauer hinweg möglich ist und dennoch möglichst wenig Material für die Funktionsschichten 2, 3 und die Abstandserweiterungselemente 22 aufgewendet wird, sodass das erfindungsgemäße Biegefederelement 1 vorteilhafte Federeigenschaften bei einem besonders niedrigen Eigengewicht aufweist.

## Patentansprüche

1. Biegefederelement (1) aus einem Faserkunststoffverbundmaterial (4, 23), wobei das Biegefederelement (1) auf zwei einander gegenüberliegenden Seiten (9, 10) einer Mittenebene jeweils eine Funktionsschicht (2, 3) aus einem Faserkunststoffverbundmaterial (4) aufweist, wobei Biegefederfasern (5) innerhalb der jeweiligen Funktionsschicht (2, 3) zumindest bündelweise relativ zueinander parallel ausgerichtet sind und entlang einer Längsrichtung (7) des Biegefederelements verlaufen, wobei das Biegefederelement (1) mindestens einen Krümmungsabschnitt (13) aufweist, in welchem die zwischen den beiden Funktionsschichten (2, 3) verlaufende Mittenebene (8) des unbelasteten Biegefederelements (1) in der Längsrichtung (7) des Biegefederelements (1) um mehr als 90° gekrümmt verläuft, wobei das Biegefederelement (1) mindestens einen Längsabschnitt (14) aufweist, in welchem die Mittenebene (8) des unbelasteten Biegefederelements (1) entweder keine nennenswerte Krümmung oder eine Krümmungsumkehr aufweist, und wobei bei einer bestimmungsgemäßen Auslenkung des Biegefederelements (1) ein in dem Krümmungsabschnitt (13) nach außen gerichtet angeordneter Funktionsschichtabschnitt (15) auf Zug beansprucht und ein in dem Krümmungsabschnitt (13) gegenüberliegender und nach innen gerichteter Funktionsschichtabschnitt (16) auf Druck beansprucht ist, **dadurch gekennzeichnet, dass** das Biegefederelement (1) in dem mindestens einen Längsabschnitt (14) mindestens eine parallel zu den beiden Funktionsschichten (2, 3) und in der Längsrichtung (7) verlaufende Matrixmaterialabführschicht (17) aufweist, die zumindest einen Anteil von Abführschichtfasern (18) aufweist, die abweichend von der Längsrichtung (7) des Biegefederelements (1) ausgerichtet sind, und dass innerhalb des mindestens einen Krümmungsabschnitts (13) ein erster Volumenanteil von Biegefederfasern (5) in den Funktionsschichten (2, 3) geringer, vorzugsweise um mehrere % geringer als ein zweiter Volumenanteil von Biegefederfasern (5) in den Funktionsschichten (2, 3) innerhalb des mindestens einen Längsabschnitts (14) ist.

2. Biegefederelement (1) nach Anspruch 1, **dadurch gekennzeichnet, dass** der erste Volumenanteil von Biegefederfasern (5) in dem mindestens einen Krümmungsabschnitt (13) geringer als 55, vorzugsweise geringer als 52 % ist, und dass der zweite Volumenanteil von Biegefederfasern (5) in dem mindestens einen Längsabschnitt (14) größer als 55%, vorzugsweise größer als 58% ist.

3. Biegefederelement (1) nach Anspruch 1 oder Anspruch 2, **dadurch gekennzeichnet, dass** die Matrixmaterialabführschicht (17) Abführschichtfasern (18) aufweist, die in zwei oder mehr zueinander in einem Winkel verlaufenden Richtungen ausgerichtet sind, wobei eine gemittelte Ausrichtung der Abführschichtfasern (18) in der Längsrichtung (7) des Biegefederelements (5) ausgerichtet ist.

4. Biegefederelement (1) nach einem der vorausgehenden Ansprüche, **dadurch gekennzeichnet, dass** die Matrixmaterialabführschicht (17) Abführschichtfasern (18) aufweist, die in zwei in einem Winkel von 90° relativ zueinander ausgerichteten Abführschichtfaserrichtungen ausgerichtet sind.

5. Biegefederelement (1) nach einem der Ansprüche 1 oder 2, **dadurch gekennzeichnet, dass** die Abführschichtfasern (18) in der Matrixmaterialabführschicht (17) eine isotrope Ausrichtung aufweisen.

6. Biegefederelement (1) nach Anspruch 3, **dadurch gekennzeichnet, dass** die Matrixmaterialabführschicht (17) ein Vliesmaterial aufweist.

7. Biegefederelement (1) nach Anspruch 6, **dadurch gekennzeichnet, dass** das Vliesmaterial ein Flächengewicht von weniger als 200 g/m², vorzugsweise von weniger als 120 g/mm² und besonders vorzugsweise von weniger als 80 g/mm² aufweist.

8. Biegefederelement (1) nach einem der vorausgehenden Ansprüche, **dadurch gekennzeichnet, dass** eine mittlere Länge der Abführschichtfasern (18) in der Matrixmaterialabführschicht (17) geringer als eine quer zu der Längsrichtung (7) gemessene Breite des Biegefederelements (1) ist.

9. Biegefederelement (1) nach einem der vorausgehenden Ansprüche, **dadurch gekennzeichnet, dass** das Biegefederelement (1) in dem mindestens einen Krümmungsabschnitt (13) ein zwischen den beiden Funktionsschichten (2, 3) angeordnetes Abstandserweiterungselement (22) aus einem anderen Material als die beiden Funktionsschichten (2, 3) aufweist.

10. Biegefederelement (1) nach Anspruch 9, **dadurch gekennzeichnet, dass** das Material des Abstandserweiterungselements (22) ein zweites Faserkunststoffverbundmaterial (23) mit Fasern (24) ist, deren Länge jeweils weniger als 30 mm, vorzugsweise weniger als 10 mm und besonders vorzugsweise weniger als 1 mm beträgt.

11. Biegefederelement (1) nach Anspruch 10, **dadurch gekennzeichnet, dass** die Fasern (24) in dem zweiten Faserkunststoffverbundmaterial (23) ungerichtet angeordnet sind.

12. Biegefederelement (1) nach Anspruch 10 oder Anspruch 11, **dadurch gekennzeichnet, dass** das zweite Faserkunststoffverbundmaterial (23) ein mit den beiden Funktionsschichten (2, 3) übereinstimmendes Matrixmaterial (6) aufweist.

13. Biegefederelement (1) nach einem der voranstehenden Ansprüche, **dadurch gekennzeichnet, dass** die Mittenebene (8) in dem mindestens einen Krümmungsabschnitt (13) des Biegefederelements (1) eine Richtungsänderung von mehr als 90°, vorzugsweise von mehr als 150° und besonders vorzugsweise von näherungsweise 180° aufweist.

14. Biegefederelement (1) nach einem der voranstehenden Ansprüche, **dadurch gekennzeichnet, dass** das Biegefederelement (1) mindestens zwei durch einen Längsabschnitt (14) voneinander getrennte und in unterschiedliche Richtungen gekrümmte Krümmungsabschnitte (13) aufweist, sodass die Mittenebene (8) über diese beiden Krümmungsabschnitte (13) hinweg einen S-förmigen Verlauf aufweist.

15. Biegefederelement (1) nach einem der voranstehenden Ansprüche, **dadurch gekennzeichnet, dass** das erste Faserkunststoffverbundmaterial (4) der beiden Funktionsschichten (2, 3) unidirektional in der Längsrichtung (7) des Biegefederelements (1) ausgerichtete Biegefederfasern (5) aufweist.

16. Biegefederelement (1) nach einem der voranstehenden Ansprüche, **dadurch gekennzeichnet, dass** das erste Faserkunststoffverbundmaterial (4) Biegefederfasern (5) aufweist, deren Länge sich in Längsrichtung (7) über das ganze Biegefederelement (1) hinweg erstreckt.

## Claims

1. Flexible spring element (1) made of a fibre-reinforced plastics composite material (4, 23), wherein the flexible spring element (1) comprises two functional layers (2, 3), in each case one made of a fibre-reinforced plastics composite material (4) on two mutually opposite sides (9, 10) of a central plane, wherein flexible spring fibres (5) in the functional layers (2, 3) are oriented parallel to one another at least in bundles and extend in a longitudinal direction (7) of the flexible spring element, wherein the flexible spring element (1) comprises at least one curved portion (13), in which the central plane (8) of the flexible spring element (1) extending between the two functional layers (2, 3) extends curved by more than 90° in the longitudinal direction (7) of the flexible spring element (1) when unloaded, wherein the flexible spring element (1) comprises at least one longitudinal portion (14) in which the central plane (8) of the flexible spring element (1) has either no significant curvature or a curvature reversal when unloaded, and wherein when the flexible spring element (1) is deflected as intended, a functional layer portion (15) arranged in the curved portion (13) and directed outwards is subjected to tensile stress and a functional layer portion (16) arranged oppositely in the curved portion (13) and directed inwards is subjected to compressive stress, **characterised in that** the flexible spring element (1) comprises, in the at least one longitudinal portion (14), at least one matrix material discharge layer (17) that extends parallel to the two functional layers (2, 3) and in the longitudinal direction (7) and that comprises at least a fraction of discharge layer fibres (18) oriented differently from the longitudinal direction (7) of the flexible spring element (1), and **in that**, within the at least one curved portion (13), a first volume fraction of flexible spring fibres (5) in the functional layers (2, 3) is smaller, preferably several % smaller, than a second volume fraction of flexible spring fibres (5) in the functional layers (2, 3) within the at least one longitudinal portion (14).

2. Flexible spring element (1) according to claim 1, **characterised in that** the first volume fraction of flexible spring fibres (5) in the at least one curved portion (13) is less than 55%, preferably less than 52%, and **in that** the second volume fraction of flexible spring fibres (5) in the at least one longitudinal portion (14) is greater than 55%, preferably greater than 58%.

3. Flexible spring element (1) according to claim 1 or claim 2, **characterised in that** the matrix material discharge layer (17) comprises discharge layer fibres (18) oriented in two or more directions extending at an angle to each other, wherein an averaged orientation of the discharge layer fibres (18) is oriented in the longitudinal direction (7) of the flexible spring element (5).

4. Flexible spring element (1) according any one of the preceding claims, **characterised in that** the matrix material discharge layer (17) comprises discharge layer fibres (18) oriented in two discharge layer fibre directions oriented at an angle of 90° relative to each other.

5. Flexible spring element (1) according any one of claims 1 or 2, **characterised in that** the discharge layer fibres (18) in the matrix material discharge layer (17) have an isotropic orientation.

6. Flexible spring element (1) according to claim 3, **characterised in that** the matrix material discharge layer (17) comprises a non-woven material.

7. Flexible spring element (1) according to claim 6, **characterised in that** the non-woven material has a weight per unit area of less than 200 g/m², preferably of less than 120 g/mm² and particularly preferably of less than 80 g/mm².

8. Flexible spring element (1) according to any one of the preceding claims, **characterised in that** an average length of the discharge layer fibres (18) in the matrix material discharge layer (17) is less than a width of the flexible spring element (1) measured transversely to the longitudinal direction (7).

9. Flexible spring element (1) according to any one of the preceding claims, **characterised in that** the flexible spring element (1) comprises, in the at least one curved portion (13), a distance widening element (22) made of a different material than the two functional layers (2, 3) and arranged between the two functional layers (2, 3).

10. Flexible spring element (1) according to claim 9, **characterised in that** the material of the distance widening element (22) is a second fibre-reinforced plastics composite material (23) with fibres (24) of which a length is in each case less than 30 mm, preferably less than 10 mm and particularly preferably less than 1 mm.

11. Flexible spring element (1) according to claim 10, **characterised in that** the fibres (24) in the second fibre-reinforced plastics composite material (23) are arranged in a non-directional manner.

12. Flexible spring element (1) according to claim 10 or 11, **characterised in that** the second fibre-reinforced plastics composite material (23) comprises a matrix material (6) corresponding to the two functional layers (2, 3).

13. Flexible spring element (1) according to any one of the preceding claims, **characterised in that** the central plane (8) in the at least one curved portion (13) of the flexible spring element (1) has a change of direction of more than 90°, preferably of more than 150° and particularly preferably of approximately 180°.

14. Flexible spring element (1) according to any one of the preceding claims, **characterised in that** the flexible spring element (1) comprises at least two curved portions (13) separated from each other by a longitudinal portion (14) and curved in different directions, so that the central plane (8) has an S-shaped course over these two curved portions (13).

15. Flexible spring element (1) according any one of the preceding claims, **characterised in that** the first fibre-reinforced plastics composite material (4) of the two functional layers (2, 3) comprises flexible spring fibres (5) unidirectionally oriented in the longitudinal direction (7) of the flexible spring element (1).

16. Flexible spring element (1) according to any one of the preceding claims, **characterised in that** the first fibre-reinforced plastics composite material (4) comprises flexible spring fibres (5) of which a length extends in the longitudinal direction (7) over the entire flexible spring element (1).

## Revendications

1. Élément de ressort de flexion (1) en matériau plastique renforcé de fibres (4, 23), l'élément de ressort de flexion (1) présentant, sur deux côtés (9, 10) opposés d'un plan médian, respectivement une couche fonctionnelle (2, 3) en matériau plastique renforcé de fibres (4), des fibres de ressort de flexion (5) étant orientées au moins par paquets parallèlement les unes par rapport aux autres à l'intérieur de la couche fonctionnelle (2, 3) respective et s'étendant le long d'une direction longitudinale (7) de l'élément de ressort de flexion, l'élément de ressort de flexion (1) présentant au moins une partie courbée (13), dans laquelle le plan médian (8) de l'élément de ressort de flexion (1) non sollicité, qui s'étend entre les deux couches fonctionnelles (2, 3), décrit une courbe de plus de 90° dans la direction longitudinale (7) de l'élément de ressort de flexion (1), l'élément de ressort de flexion (1) présentant au moins une partie longitudinale (14), dans laquelle le plan médian (8) de l'élément de ressort de flexion (1) non sollicité soit ne présente aucune courbure notable soit présente une inversion de courbure, et dans lequel, lors d'une déformation conforme à sa destination de l'élément de ressort de flexion (1), une partie de couche fonctionnelle (15) disposée orientée vers l'extérieur dans la partie courbée (13) est sollicitée par un effort de traction et une partie de couche fonctionnelle (16) opposée dans la partie courbée (13) et orientée vers l'intérieur est sollicitée par un effort de compression, **caractérisé en ce que** l'élément de ressort de flexion (1) présente, dans l'au moins une partie longitudinale (14), au moins une couche d'évacuation de matériau de matrice (17) s'étendant parallèlement aux deux couches fonctionnelles (2, 3) et dans la direction longitudinale (7), qui présente au moins une fraction de fibres de couche d'évacuation (18) qui sont orientées de manière divergente de la direction longitudinale (7) de l'élément de ressort de flexion (1), et **en ce que**, à l'intérieur de l'au moins une partie courbée (13), une première fraction volumique de fibres de ressort de flexion (5) dans les couches fonctionnelles (2, 3) est inférieure, de préférence inférieure de plusieurs %, à une seconde fraction volumique de fibres de ressort de flexion (5) dans les couches fonctionnelles (2, 3) à l'intérieur de l'au moins une partie longitudinale (14).

2. Élément de ressort de flexion (1) selon la revendication 1, **caractérisé en ce que** la première fraction volumique de fibres de ressort de flexion (5) dans l'au moins une partie courbée (13) est inférieure à 55, de préférence inférieure à 52 %, et **en ce que** la seconde fraction volumique de fibres de ressort de flexion (5) dans l'au moins une partie longitudinale (14) est supérieure à 55 %, de préférence supérieure à 58 %.

3. Élément de ressort de flexion (1) selon la revendication 1 ou la revendication 2, **caractérisé en ce que** la couche d'évacuation de matériau de matrice (17) présente des fibres de couche d'évacuation (18) qui sont orientées dans deux directions ou plus s'étendant selon un angle les unes par rapport aux autres, une orientation moyenne des fibres de couche d'évacuation (18) étant orientée dans la direction longitudinale (7) de l'élément de ressort de flexion (5).

4. Élément de ressort de flexion (1) selon l'une des revendications précédentes, **caractérisé en ce que** la couche d'évacuation de matériau de matrice (17) présente des fibres de couche d'évacuation (18) qui sont orientées dans deux directions de fibres de couche d'évacuation orientées l'une par rapport à l'autre selon un angle de 90°.

5. Élément de ressort de flexion (1) selon l'une des revendications 1 ou 2, **caractérisé en ce que** les fibres de couche d'évacuation (18) dans la couche d'évacuation de matériau de matrice (17) présentent une orientation isotrope.

6. Élément de ressort de flexion (1) selon la revendication 3, **caractérisé en ce que** la couche d'évacuation de matériau de matrice (17) présente un matériau non tissé.

7. Élément de ressort de flexion (1) selon la revendication 6, **caractérisé en ce que** le matériau non tissé présente un poids par surface inférieur à 200 g/m², de préférence inférieur à 120 g/mm² et de manière particulièrement préférée inférieur à 80 g/mm².

8. Élément de ressort de flexion (1) selon l'une des revendications précédentes, **caractérisé en ce qu'**une longueur moyenne des fibres de couche d'évacuation (18) dans la couche d'évacuation de matériau de matrice (17) est inférieure à une largeur de l'élément de ressort de flexion (1) mesurée transversalement à la direction longitudinale (7).

9. Élément de ressort de flexion (1) selon l'une des revendications précédentes, **caractérisé en ce que** l'élément de ressort de flexion (1) présente, dans l'au moins une partie courbée (13), un élément d'écartement (22) disposé entre les deux couches fonctionnelles (2, 3), constitué d'un autre matériau que les deux couches fonctionnelles (2, 3).

10. Élément de ressort de flexion (1) selon la revendication 9, **caractérisé en ce que** le matériau de l'élément d'écartement (22) est un second matériau plastique renforcé de fibres (23), doté de fibres (24) dont la longueur est respectivement inférieure à 30 mm, de préférence inférieure à 10 mm et de manière particulièrement préférée inférieure à 1 mm.

11. Élément de ressort de flexion (1) selon la revendication 10, **caractérisé en ce que** les fibres (24) dans le second matériau plastique renforcé de fibres (23) sont disposées de manière non orientée.

12. Élément de ressort de flexion (1) selon la revendication 10 ou la revendication 11, **caractérisé en ce que** le second matériau plastique renforcé de fibres (23) présente un matériau de matrice (6) correspondant à celui des deux couches fonctionnelles (2, 3).

13. Élément de ressort de flexion (1) selon l'une des revendications précédentes, **caractérisé en ce que** le plan médian (8) dans l'au moins une partie courbée (13) de l'élément de ressort de flexion (1) présente un changement de direction de plus de 90°, de préférence de plus de 150° et de manière particulièrement préférée d'approximativement 180°.

14. Élément de ressort de flexion (1) selon l'une des revendications précédentes, **caractérisé en ce que** l'élément de ressort de flexion (1) présente au moins deux parties courbées (13) séparées l'une de l'autre par une partie longitudinale (14) et courbées dans des directions différentes, de telle sorte que le plan médian (8) présente un tracé en forme de S sur l'ensemble de ces deux parties courbées (13).

15. Élément de ressort de flexion (1) selon l'une des revendications précédentes, **caractérisé en ce que** le premier matériau plastique renforcé de fibres (4) des deux couches fonctionnelles (2, 3) présente des fibres de ressort de flexion (5) orientées de manière unidirectionnelle dans la direction longitudinale (7) de l'élément de ressort de flexion (1) .

16. Élément de ressort de flexion (1) selon l'une des revendications précédentes, **caractérisé en ce que** le premier matériau plastique renforcé de fibres (4) présente des fibres de ressort de flexion (5) dont la longueur s'étend dans la direction longitudinale (7) sur l'ensemble de l'élément de ressort de flexion (1).
